# FASCICULE DE BREVET EUROPEEN

(11) **EP 4 624 857 B1**
(45) Date de publication et mention de la délivrance du brevet: **18.03.2026**
(21) Numéro de dépôt: 25165391.1
(22) Date de dépôt: 21.03.2025
(51) Int. Cl.: F28D 20/02

(54) **ENCEINTE DE STOCKAGE THERMIQUE DE CHAUD ET DE FROID PAR COUPLAGE ENTRE STOCKAGE THERMOCLINE ET STOCKAGE MCP**
WÄRME- UND KÄLTESPEICHERUNGSGEHÄUSE DURCH KOPPLUNG ZWISCHEN THERMOCLINE-SPEICHER UND MCP-SPEICHERUNG
THERMAL STORAGE ENCLOSURE FOR HOT AND COLD BY COUPLING BETWEEN THERMOCLINE STORAGE AND MCP STORAGE

(30) Priorité: 25.03.2024 FR 2402974
(43) Date de publication de la demande: 01.10.2025
(73) Titulaire: Commissariat à l'Energie Atomique et aux Energies Alternatives, 75015 Paris (FR)
(72) Inventeur: MONTZIEUX, Guillaume, 38054 Grenoble Cedex 09 (FR); BENTIVOGLIO, Fabrice, 38054 Grenoble Cedex 09 (FR); BENTIVOGLIO, Jerome, 38054 Grenoble Cedex 09 (FR); BRUCH, Arnaud, 38054 Grenoble Cedex 09 (FR); CHAMPEL, Bénédicte, 38054 Grenoble Cedex 09 (FR); SY, Awa, 38054 Grenoble Cedex 09 (FR)
(74) Mandataire: Regimbeau

(56) Documents cités:
- EP-A1- 3 502 606
- EP-A1- 4 019 878
- EP-B1- 2 502 004
- US-B1- 11 519 675

## Description

### DOMAINE TECHNIQUE DE L'INVENTION

La présente invention se rapporte au domaine général des Systèmes de Stockage Thermique (SST), notamment les systèmes de stockage thermique par thermocline et/ou par Matériaux à Changement de Phase (MCP), et plus spécifiquement à de tels systèmes de stockage bi-fonction permettant le stockage de chaleur et de froid en alternance, en particulier de manière saisonnière. En particulier, la présente invention se rapporte à une enceinte de stockage thermique telle que définie par le préambule de la revendication 1, et telle que divulguée par le document EP 3 502 606.

L'invention trouve son application dans tout type de système de stockage de chaud et de froid, et peut être implémentée dans tout type de réseaux de chaud et de froid, notamment pour le chauffage, y compris la production d'eau chaude sanitaire, et le rafraîchissement de bâtiments (climatisation), notamment domestiques, urbains, ruraux ou industriels.

L'invention propose ainsi une enceinte de stockage thermique de chaud et de froid par couplage entre stockage de type thermocline et stockage de type matériau à changement de phase, ainsi qu'un procédé de stockage thermique mis en œuvre au moyen d'une telle enceinte de stockage thermique.

### ÉTAT DE LA TECHNIQUE

Le stockage thermique de type thermocline est un stockage par chaleur sensible comprenant un gradient de température appelé thermocline. Le stockage de chaleur s'effectue en injectant un fluide de transfert chaud en partie haute d'une cuve remplie d'un matériau de stockage à température basse. Le fluide cède sa chaleur au solide qui se réchauffe progressivement. Au sein du stockage apparaît une zone chaude, une zone froide et un gradient thermique qui les sépare et qui est donc la thermocline. Le gradient progresse le long de la cuve jusqu'à en sortir. La charge est alors arrêtée. Lors de la décharge, le fluide à température basse est injecté en bas de cuve et le procédé inverse se produit. Le matériau cède sa chaleur au fluide, le fluide se réchauffe. Le fluide chaud peut ensuite être utilisé pour des procédés énergétiques.

Le stockage thermique exploitant la chaleur latente d'un matériau à changement de phase (MCP) exploite la capacité du MCP à passer de l'état solide à l'état liquide (fusion) sous l'effet de la chaleur. L'énergie de changement de phase est absorbée lors de la fusion du MCP et restituée lors de sa solidification. La densité énergétique des MCP, exprimée en kWh/m³, est plus élevée que celle des systèmes de stockage par chaleur sensible, ce qui confère aux systèmes de stockage par chaleur latente une plus grande compacité et des pertes thermiques moindres.

Typiquement, un fluide caloporteur est utilisé pour transférer la chaleur de la source à l'unité de stockage. Le MCP subissant des cycles de fusion/solidification, il ne peut pas être utilisé comme fluide de transfert. Les technologies de transfert de chaleur sont diverses, comme l'utilisation d'échangeurs à tubes à ailettes, d'échangeurs multitubes ou encore l'encapsulation du MCP. Ainsi, lorsqu'un fluide chaud entre en contact indirect avec le MCP, celui-ci passe de l'état solide à l'état liquide (fusion) captant la chaleur du fluide. A l'inverse, si le fluide est froid, le MCP restitue sa chaleur au fluide caloporteur lors de sa solidification.

L'utilisation d'échangeurs à tubes, notamment sous forme de serpentins coaxiaux, est par exemple décrite dans l'article « A Review of Recent Passive Heat Transfer Enhancement Methods », S. S. M. Ajarostaghi et al, MDPI, Energies 2022, 15, 986, 28 janvier 2022. Ainsi, un échangeur de chaleur à double serpentin hélicoïdal est évalué dans un processus de stockage de glace. D'autres échangeurs à tubes sont encore décrits dans l'article « Performance evaluation of three latent heat storage designs for cogeneration applications », T. Xu et al, Solar Energy 225 (2021), 444-462, 28 juillet 2021, dans l'article « Development and validation of Nusselt number correlations for a helical coil based energy storage integrated with solar water heating system », S. Ayuob et al, Journal of Energy Storage, Volume 55, Partie D, 30 novembre 2022, ou encore dans l'article « Experimental investigations on the thermal performance of an ice storage system using twin concentric helical coil », H. E. Abdelrahman, Applied Thermal Engineering, Volume 179, octobre 2020.

Par ailleurs, l'encapsulation du MCP, notamment sous forme tubulaire, est par exemple décrite dans l'article « A review on macro-encapsulated phase change material for building envelope applications », Z. Liu et al, Building and Environment, Volume 144, pages 281-294, 15 octobre 2018.

On connait déjà des solutions de stockage thermique dans l'art antérieur qui permettent soit le stockage de type « chaud » pour le chauffage, soit le stockage de type « froid » pour le rafraîchissement.

Cependant, il existe un besoin pour concevoir un système de stockage thermique à la fois de type « chaud » et de type « froid » qui puisse être le plus compact possible et le plus simple possible en vue de ses applications, et qui puisse en particulier répondre aux besoins alternés, notamment saisonniers, en chauffage et en rafraîchissement. Il existe en particulier un besoin pour optimiser les moyens et les manières de positionnement des tubes des échangeurs à tubes d'une part, et des encapsulants de MCP d'autre part, ainsi que des tubes par rapport aux encapsulants.

### EXPOSÉ DE L'INVENTION

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, une enceinte de stockage thermique, en particulier pour le stockage de chaud et le stockage de froid, en particulier de chaud et de froid par alternance, notamment saisonnière, en particulier entre été et hiver, par couplage entre stockage de type thermocline et stockage de type matériau à changement de phase, caractérisée en ce qu'elle comporte :
- une cuve, définissant un volume interne, comportant une première extrémité et une deuxième extrémité, opposée à la première extrémité,
- un premier élément de fermeture, situé au niveau de la première extrémité de la cuve,
- un deuxième élément de fermeture, situé au niveau de la deuxième extrémité de la cuve, le volume interne étant délimité par la cuve et les premier et deuxième éléments de fermeture,
- un élément de séparation, situé à l'intérieur de la cuve, divisant le volume interne en un premier volume et un deuxième volume, et délimitant l'enceinte de stockage thermique en une première partie contenant le premier volume et une deuxième partie contenant le deuxième volume,
la première partie comportant un échangeur thermique de type serpentin dans lequel un premier fluide caloporteur est apte à circuler, en particulier pour le stockage de froid,
la deuxième partie comportant une pluralité de capsules contenant un matériau à changement de phase,
la première partie comportant des premiers moyens d'entrée et/ou de sortie d'un deuxième fluide caloporteur apte à circuler dans le premier volume autour de l'échangeur thermique de type serpentin, et dans le deuxième volume autour des capsules, en particulier pour le stockage de froid et pour le stockage de chaud, l'élément de séparation étant configuré pour permettre la communication fluidique du deuxième fluide caloporteur entre la première partie et la deuxième partie, le deuxième fluide caloporteur agissant notamment en tant que fluide à changement de phase pour le stockage de froid et tant que fluide caloporteur pour le stockage de chaud, et
la deuxième partie comportant des deuxièmes moyens d'entrée et/ou de sortie du deuxième fluide caloporteur.

L'enceinte de stockage thermique selon l'invention peut en outre comporter l'une ou plusieurs des caractéristiques suivantes prises isolément ou suivant toutes combinaisons techniques possibles.

Par « stockage de froid » et « stockage de chaud », on entend que l'énergie thermique stockée de « froid » est inférieure à l'énergie thermique stockée de « chaud », notamment inférieure d'au moins 20°C, voire d'au moins 40°C, voire encore d'au moins 50°C, voire encore d'au moins 100°C. En particulier, le stockage de froid peut correspondre à une température comprise entre -10°C et 15°C, et le stockage de chaud peut correspondre à une température comprise entre 35°C et 90°C.

Avantageusement, l'enceinte de stockage thermique s'étend verticalement en cours d'utilisation. En particulier, le premier élément de fermeture et le deuxième élément de fermeture sont avantageusement superposés verticalement l'un par rapport à l'autre, correspondant respectivement au bas et au haut de l'enceinte de stockage thermique. Avantageusement encore, le deuxième fluide caloporteur est de l'eau.

La température de changement de phase solide/liquide du matériau à changement de phase peut être comprise entre 25°C et 70°C, voire entre 40°C et 70°C, voire encore entre 50°C et 70°C.

Le deuxième fluide caloporteur peut être un fluide à changement de phase. En particulier, le deuxième fluide caloporteur peut présenter une température de changement de phase solide/liquide qui peut être comprise entre -5°C et 15°C, notamment de l'ordre de 0°C.

Avantageusement, la température de changement de phase solide/liquide du matériau à changement de phase peut être supérieure d'au moins 10°C, voire d'au moins 20°C, à la température de changement de phase solide/liquide du deuxième fluide caloporteur.

Préférentiellement, la cuve peut se présenter sous la forme d'une cuve tubulaire, notamment de forme cylindrique, par exemple sous la forme d'une calandre tubulaire, notamment une calandre cylindrique.

Préférentiellement encore, la cuve peut être ouverte au niveau de sa première extrémité et/ou de sa deuxième extrémité.

De plus, le premier élément de fermeture et/ou le deuxième élément de fermeture peuvent avantageusement se présenter sous la forme de couvercle, notamment de couvercle amovible par rapport à la cuve. Le premier élément de fermeture et/ou le deuxième élément de fermeture peuvent présenter une forme de calotte sphérique, notamment une forme de calotte sphérique aplatie en son centre. En variante, le premier élément de fermeture et/ou le deuxième élément de fermeture peuvent encore présenter une forme plate. De plus, le premier élément de fermeture et/ou le deuxième élément de fermeture peuvent comporter une bride de fixation à la cuve, notamment une bride de fixation formée sur leur pourtour, notamment sur le pourtour d'une forme de calotte sphérique, en particulier de calotte sphérique aplatie en son centre, ou d'une forme plate. La cuve peut comporter également une bride de fixation au niveau de sa première extrémité et/ou sa deuxième extrémité, notamment sur son pourtour, pour sa fixation au premier élément de fermeture et/ou au deuxième élément de fermeture.

L'élément de séparation peut se présenter sous la forme d'une plaque séparatrice, notamment en forme de disque, par exemple un disque évidé en son centre. L'élément de séparation peut ainsi comporter une plaque annulaire. En particulier, l'élément de séparation peut se présenter sous la forme d'un ou plusieurs anneaux de portage. L'élément de séparation peut être fixé à la paroi interne de la cuve.

Par ailleurs, l'échangeur thermique de type serpentin peut comporter une pluralité de serpentins, notamment deux serpentins, notamment encore au moins trois serpentins.

Les serpentins peuvent être avantageusement concentriques. Les serpentins peuvent ainsi présenter chacun une forme hélicoïdale d'étendue selon l'axe longitudinal central de l'enceinte de stockage thermique, les serpentins étant centrés par rapport à l'axe longitudinal central de l'enceinte de stockage thermique.

De plus, les serpentins peuvent être avantageusement reliés en série. Avantageusement, le montage en série des serpentins peut permettre d'obtenir une vitesse d'écoulement du premier fluide caloporteur circulant dans les serpentins au début du régime turbulent de sorte à favoriser un échange thermique.

En outre, chaque serpentin peut comporter un tube, notamment un tube métallique, par exemple en acier inoxydable, par exemple de type inox 316L ou 304L, entouré d'ailette(s), notamment sous la forme d'une ailette spiralée, notamment métallique(s), par exemple en cuivre.

L'échangeur thermique de type serpentin peut en particulier comporter un serpentin comprenant un tube central s'étendant selon l'axe central longitudinal de l'enceinte de stockage thermique pour l'entrée et/ou la sortie, notamment l'entrée, du premier fluide caloporteur.

De plus, l'échangeur thermique de type serpentin peut comporter un serpentin comprenant un tube latéral s'étendant selon l'axe central longitudinal de l'enceinte de stockage thermique pour la sortie et/ou l'entrée, notamment la sortie, du premier fluide caloporteur, le tube latéral étant notamment décalé axialement par rapport au tube central.

La première partie peut comporter un premier dispositif de supportage de l'échangeur thermique de type serpentin configuré pour garantir un espacement entre chaque spire du ou des serpentin(s). Avantageusement, le premier dispositif de supportage peut également permettre de supporter de grandes longueurs de serpentin.

En particulier, le premier dispositif de supportage peut comporter au moins un premier montant longitudinal, notamment de section sensiblement rectangulaire, notamment au moins deux premiers montants longitudinaux, voire encore au moins trois premiers montants longitudinaux, notamment pour chaque serpentin de l'échangeur thermique, s'étendant notamment selon l'axe longitudinal de l'enceinte de stockage thermique, notamment entre le premier élément de fermeture et l'élément de séparation, pourvu d'une ou plusieurs pattes de maintien des spires du ou des serpentin(s), notamment des pattes de maintien disposées régulièrement le long dudit au moins un premier montant longitudinal, notamment sous forme de crochets entourant au moins partiellement les spires.

Avantageusement, le ou les premiers montants longitudinaux peuvent avoir une épaisseur suffisamment mince, par exemple comprise entre 3,5 mm et 4,5 mm, notamment de l'ordre de 4 mm.

De plus, au moins un premier montant longitudinal, notamment chaque premier montant longitudinal, peut comporter un orifice de fixation, notamment un perçage, pour le maintien en position de l'échangeur thermique de type serpentin par rapport à l'élément de séparation, notamment pour la fixation à un ou plusieurs anneaux de portage de l'élément de séparation.

En outre, les capsules peuvent se présenter sous la forme de tubes, notamment de tubes cylindriques. En variante, les capsules peuvent encore se présenter sous la forme de billes ou boulets, ou encore de plaques. Les capsules peuvent être réparties sur plusieurs étages superposés les uns aux autres selon l'axe central longitudinal de l'enceinte de stockage thermique. Chaque étage peut comporter une pluralité de capsules, notamment au moins 6, voire au moins 8, voire au moins 10. Les capsules peuvent s'étendre sensiblement parallèlement les unes aux autres selon une direction sensiblement perpendiculaire à l'axe central longitudinal de l'enceinte de stockage thermique. Avantageusement, les capsules peuvent s'étendre horizontalement par rapport à l'axe central longitudinal vertical de l'enceinte de stockage thermique de sorte à permettre d'éviter une éventuelle ségrégation du matériau à changement de phase situé à l'intérieur des capsules.

En particulier, deux étages adjacents peuvent comporter des capsules qui s'étendent de façon croisée les unes par rapport aux autres. Les capsules d'un premier étage peuvent notamment s'étendre sensiblement perpendiculairement par rapport aux capsules d'un deuxième étage adjacent au premier étage.

Par ailleurs, le volume des capsules peut être rempli partiellement par le matériau à changement de phase, les capsules étant notamment remplies à 95 % ou moins de leur volume.

La deuxième partie peut comporter au moins 5, voire au moins 7, voire au moins 9, étages de capsules.

Préférentiellement, le matériau à changement de phase des capsules peut comporter de l'acétate de sodium trihydraté.

Par ailleurs, la deuxième partie peut comporter un deuxième dispositif de supportage des capsules configuré pour garantir un espacement entre les capsules et permettre la circulation du deuxième fluide caloporteur. Avantageusement, le deuxième dispositif de supportage est configuré pour permettre le positionnement et le maintien en position des capsules.

Par ailleurs, le premier élément de fermeture peut comporter les premiers moyens d'entrée et/ou de sortie, notamment sous la forme d'un premier distributeur, du deuxième fluide caloporteur.

En particulier, l'échangeur thermique de type serpentin peut comporter un serpentin comprenant un tube central s'étendant selon l'axe central longitudinal de l'enceinte de stockage thermique pour l'entrée et/ou la sortie, notamment l'entrée, du premier fluide caloporteur. Les premiers moyens d'entrée et/ou de sortie peuvent comporter une première ouverture tubulaire dans laquelle débouche le tube central, de section transversale inférieure à la section transversale de la première ouverture tubulaire. Le deuxième fluide caloporteur peut être apte à circuler entre la paroi interne de l'ouverture tubulaire et la paroi externe du tube central.

De plus, le premier élément de fermeture peut comporter une première plaque déflectrice à l'intérieur du premier volume au droit des premiers moyens d'entrée et/ou de sortie, notamment fixée à la paroi interne du premier élément de fermeture, notamment par le biais de plots de fixation, notamment au moins deux, voire au moins trois, voire au moins quatre, permettant un espacement entre la première plaque déflectrice et la paroi interne du premier élément de fermeture. Avantageusement, la présence de la première plaque déflectrice peut permettre de limiter l'effet de jet et d'assurer une homogénéisation de la circulation du deuxième fluide caloporteur dans le premier volume.

En outre, le deuxième élément de fermeture peut comporter les deuxièmes moyens d'entrée et/ou de sortie, notamment sous la forme d'un deuxième distributeur, du deuxième fluide caloporteur.

Les deuxièmes moyens d'entrée et/ou de sortie peuvent comporter une deuxième ouverture tubulaire, notamment sous la forme d'un tube s'étendant depuis la paroi externe du deuxième élément de fermeture, notamment depuis le centre de cette paroi externe, pour la circulation du deuxième fluide caloporteur.

De plus, le deuxième élément de fermeture peut comporter une deuxième plaque déflectrice à l'intérieur du deuxième volume au droit des deuxièmes moyens d'entrée et/ou de sortie, notamment fixée à la paroi interne du deuxième élément de fermeture, notamment par le biais de plots de fixation notamment au moins deux, voire au moins trois, voire au moins quatre, permettant un espacement entre la deuxième plaque déflectrice et la paroi interne du deuxième élément de fermeture. Avantageusement, la présence de la deuxième plaque déflectrice peut permettre de limiter l'effet de jet et d'assurer une homogénéisation de la circulation du deuxième fluide caloporteur dans le deuxième volume.

Les première et deuxième plaques déflectrices peuvent être ou non identiques. Préférentiellement, elles ont la même forme, notamment une forme de disque. La première plaque déflectrice est notamment sous la forme d'un disque avec une ouverture centrale permettant le passage du tube central. La deuxième plaque déflectrice est notamment sous la forme d'un disque plein.

De plus, l'invention a également pour objet, selon un autre de ses aspects, un procédé de stockage thermique mis en œuvre au moyen d'une enceinte de stockage thermique telle que définie précédemment, caractérisé en ce qu'il comporte :
- l'étape de stockage de froid par circulation du premier fluide caloporteur dans l'échangeur thermique de type serpentin entraînant un stockage d'énergie latente par changement de phase liquide/solide, au moins partiel, du deuxième fluide caloporteur contenu dans le premier volume et un stockage d'énergie sensible de type thermocline par une diminution de température du deuxième fluide caloporteur contenu dans le volume interne,
   et/ou,
- l'étape de stockage de chaud par circulation du deuxième fluide caloporteur, notamment entre le deuxième élément de fermeture et le premier élément de fermeture, entraînant un stockage d'énergie latente par changement de phase solide/liquide du matériau à changement de phase contenu dans les capsules et un stockage d'énergie sensible de type thermocline par une augmentation de température du matériau à changement de phase et du deuxième fluide caloporteur contenu dans le volume interne.

### BRÈVE DESCRIPTION DES FIGURES

D'autres avantages, buts et caractéristiques particulières de l'invention ressortiront de la description non limitative qui suit d'au moins un mode de mise en œuvre de la présente invention, en regard des figures annexées, sur lesquelles :
- la figure 1 représente, selon une vue de face en perspective avec l'intérieur de la cuve rendu visible, un exemple d'enceinte de stockage thermique conforme à l'invention,
- la figure 2 est une vue du dessus de l'enceinte de stockage thermique de la figure 1, avec l'intérieur de la cuve rendu visible,
- la figure 3 est une vue du dessous de l'enceinte de stockage thermique de la figure 1, avec l'intérieur de la cuve rendu visible,
- la figure 4 est une vue de face à la fois en coupe verticale et en perspective de l'enceinte de stockage thermique de la figure 1, permettant de visualiser l'intérieur de la cuve,
- la figure 5 représente, selon une vue de face en perspective, l'échangeur thermique de type serpentin de l'enceinte de stockage thermique de la figure 1,
- la figure 6 est une vue du dessus de l'échangeur thermique de la figure 5,
- la figure 7 est une vue du dessous de l'échangeur thermique de la figure 5,
- la figure 8 représente, partiellement et en perspective, un exemple de serpentin avec une ailette spiralée d'un échangeur thermique de type serpentin d'une enceinte de stockage thermique conforme à l'invention,
- la figure 9 représente, selon une vue en perspective, les capsules contenues dans le deuxième volume de la deuxième partie de l'enceinte de stockage thermique de la figure 1,
- la figure 10 est une vue du dessus des capsules de la figure 9,
- la figure 11 est une vue du dessous des capsules de la figure 9,
- la figure 12 est une vue agrandie en coupe partielle de la partie inférieure de la première partie de l'enceinte de stockage thermique de la figure 1,
- la figure 13 est une vue agrandie en perspective partielle de la partie inférieure de la première partie de l'enceinte de stockage thermique de la figure 1,
- la figure 14 est une vue agrandie en coupe partielle de la partie supérieure de la deuxième partie de l'enceinte de stockage thermique de la figure 1, et
- la figure 15 est une vue agrandie en perspective partielle de la partie supérieure de la deuxième partie de l'enceinte de stockage thermique de la figure 1.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### DESCRIPTION DÉTAILLÉE DE L'INVENTION

Dans toute la description, donnée à titre d'exemple de réalisation non limitatif, il est noté que les termes « vertical » et « horizontal » sont définis par rapport à l'axe central longitudinal de l'enceinte de stockage thermique. Ils sont en particulier relatifs à une utilisation avantageuse de l'enceinte de stockage thermique selon une étendue verticale.

En outre, il est à noter que les caractéristiques décrites ci-après pour l'enceinte de stockage thermique 100 peuvent être considérées séparément ou selon toute combinaison techniquement possible.

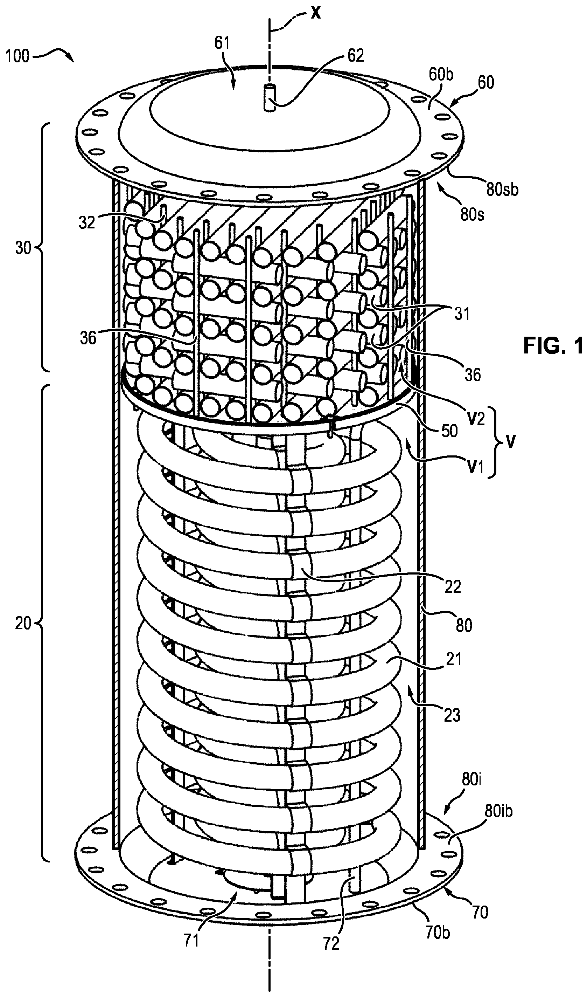

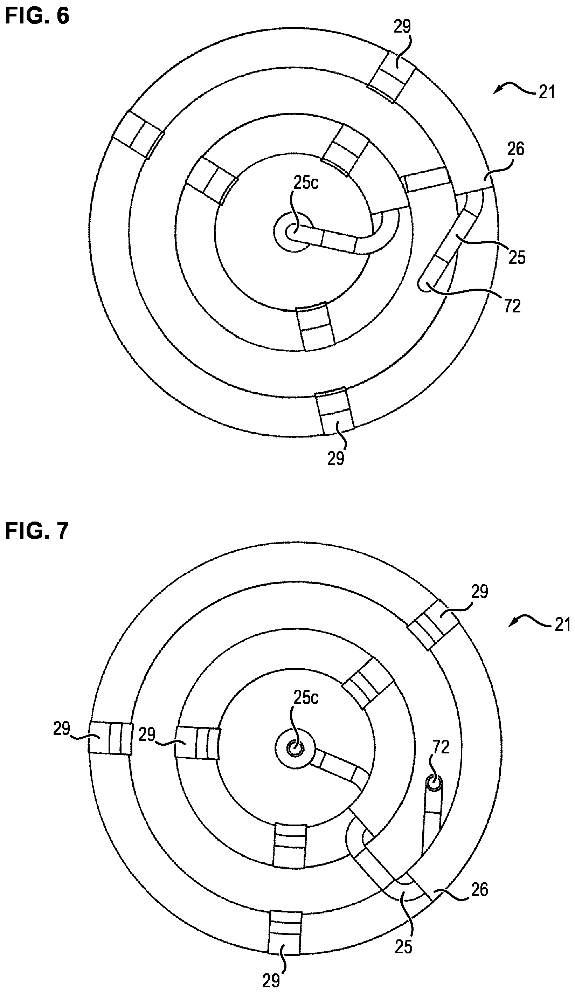

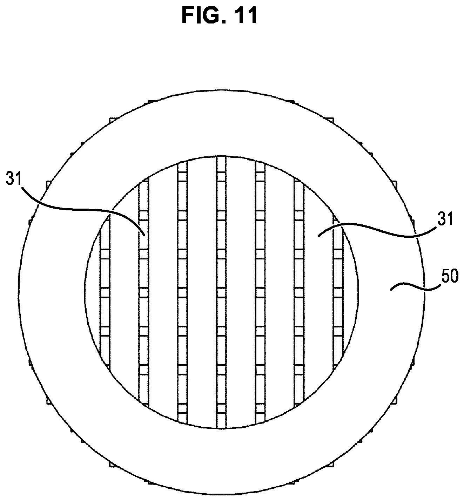

En référence aux figures 1 à 15, on va décrire un exemple d'enceinte de stockage thermique 100 permettant le stockage de chaud et de froid par le biais de l'utilisation d'un stockage par MCP et d'un stockage par thermocline. En particulier, l'enceinte de stockage thermique 100 peut permettre le stockage alternatif selon les besoins, de l'énergie « chaude » dans des capsules 31 et dans le deuxième fluide caloporteur 23 présent dans la cuve 80 sous forme de thermocline et de l'énergie « froide » sous forme solide, notamment sous forme de glace, autour d'un échangeur thermique de type serpentin 21. Le stockage peut ainsi être effectué en alternance et de façon saisonnière, par exemple pour des applications d'habitat. Avantageusement, une même quantité d'énergie de chaud et de froid peut être stockée.

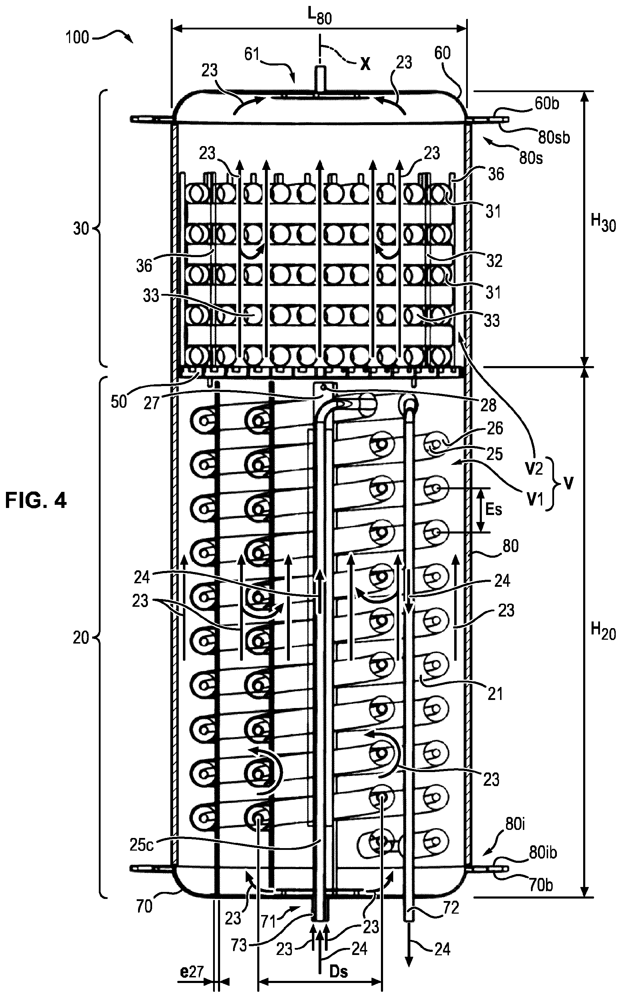

Ainsi, comme visible notamment sur les figures 1 et 4, l'enceinte de stockage thermique 100 comporte tout d'abord une cuve 80 qui définit un volume interne V. La cuve 80 comporte une première extrémité 80i et une deuxième extrémité 80s, opposée à la première extrémité 80i. Elle s'étend verticalement selon un axe central longitudinal X.

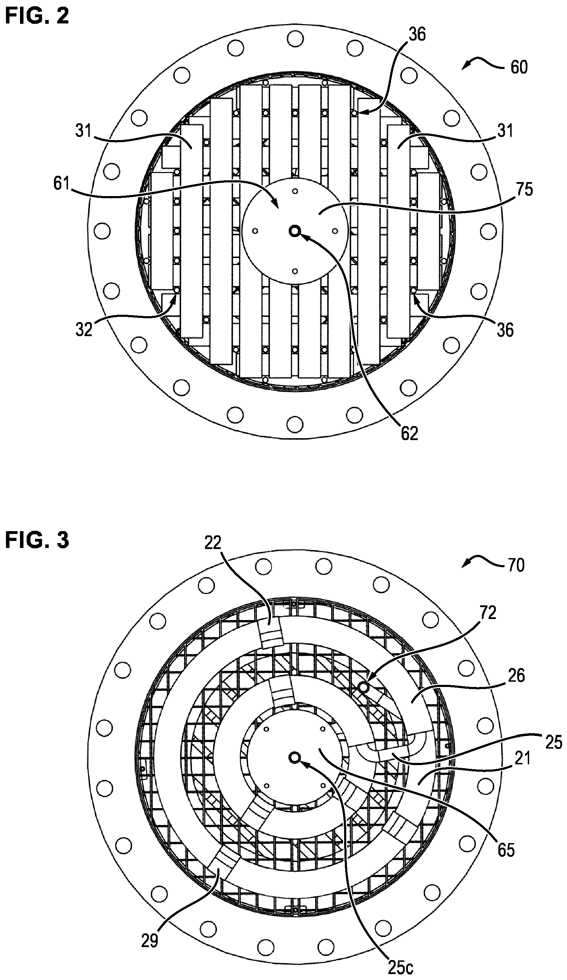

La cuve 80 peut être sous la forme d'une calandre tubulaire cylindrique ouverte à chaque extrémité après déboulonnage, la cuve 80 comportant notamment une première bride de fixation 80ib à sa première extrémité 80i et une deuxième bride de fixation 80sb à sa deuxième extrémité 80s, respectivement pour la fixation de premier 70 et deuxième 60 éléments de fermeture, visibles sur les figures 2 et 3. Cette possibilité d'accès à l'intérieur de la cuve 80 permet notamment de faciliter les maintenances pour les première 20 et deuxième 30 parties définies par la suite.

Le premier élément de fermeture 70 se situe au niveau de la première extrémité 80i de la cuve 80 et le deuxième élément de fermeture 60 se situe au niveau de la deuxième extrémité 80s de la cuve 80. Ils se présentent sous la forme de calotte aplatie en son centre avec une bride de fixation 60b, 70b formée sur leur pourtour.

Il est à noter que l'enceinte de stockage thermique 100 peut comporter un joint d'étanchéité entre la cuve 80 et le premier élément de fermeture 70 et/ou un joint d'étanchéité entre la cuve 80 et le deuxième élément de fermeture 60, notamment un joint d'étanchéité en polytétrafluoroéthène (PTFE).

Par ailleurs, un élément de séparation 50 est prévu à l'intérieur de la cuve 80. Il divise le volume interne V en un premier volume V1 et un deuxième volume V2 et délimite l'enceinte de stockage thermique 100 en une première partie 20 contenant le premier volume V1 et une deuxième partie 30 contenant le deuxième volume V2. L'élément de séparation 50 se présente sous la forme d'une plaque séparatrice, notamment sous la forme d'un anneau fixé à la paroi interne de la cuve 80.

Le diamètre externe de l'élément de support 50 peut par exemple être compris entre 550 mm et 600 mm, et le diamètre interne de l'élément de support 50 peut par exemple être compris entre 350 mm et 400 mm.

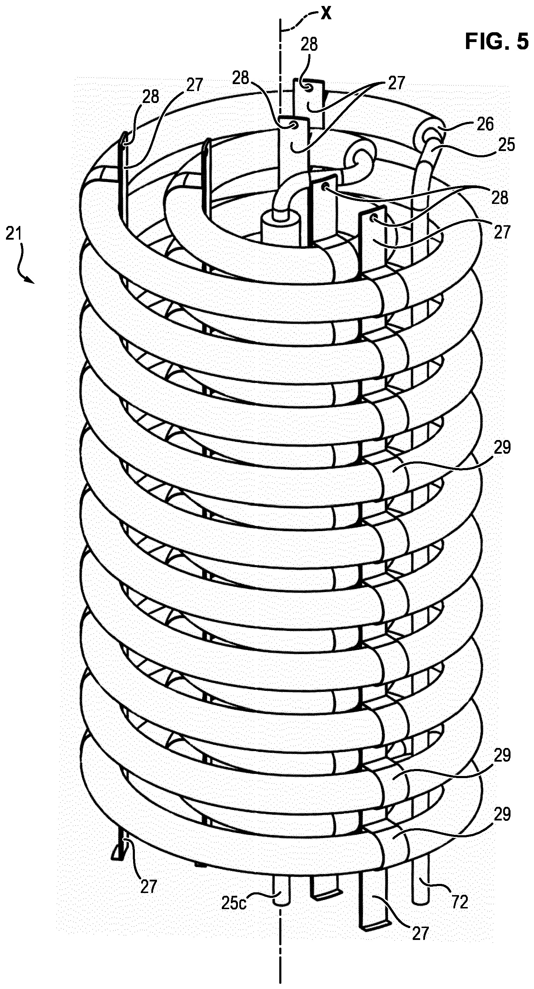

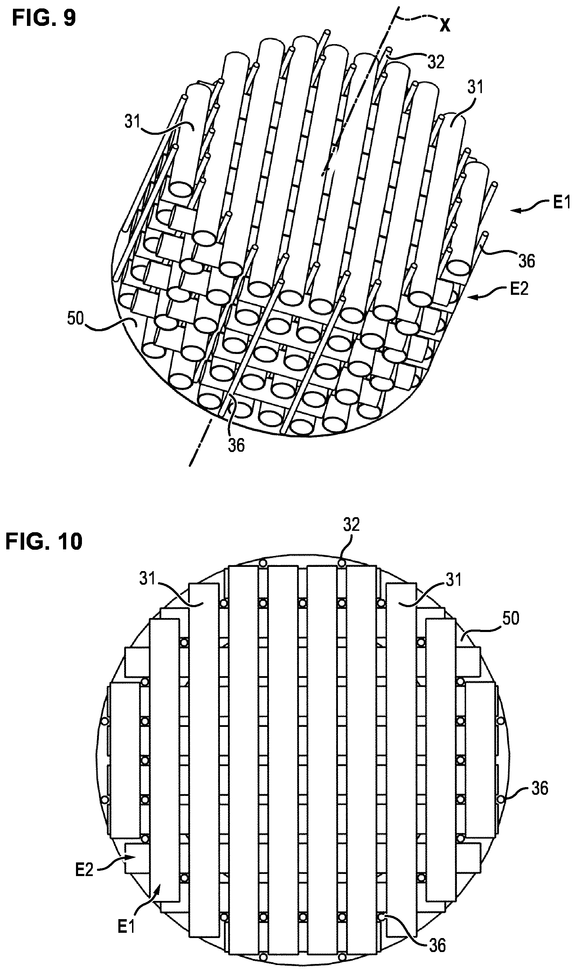

Par ailleurs, la première partie 20 comporte un échangeur thermique de type serpentin 21, mieux visible sur les figures 5 à 7, dans lequel un premier fluide caloporteur 24 circule et la deuxième partie 30 comporte une pluralité de capsules 31, mieux visibles sur les figures 9 à 11, contenant un matériau à changement de phase 33.

Comme visible sur la figure 4, la première partie 20 peut par exemple présenter une hauteur H₂₀, mesurée selon l'axe central longitudinal X, comprise entre 1000 mm et 1100 mm. La deuxième partie 30 peut par exemple présenter une hauteur H₃₀, mesurée selon l'axe central longitudinal X, comprise entre 500 mm et 600 mm. De plus, la largeur L₈₀ de la cuve 80, sans la présence de bride de fixation 80sb, peut être comprise entre 550 mm et 650 mm.

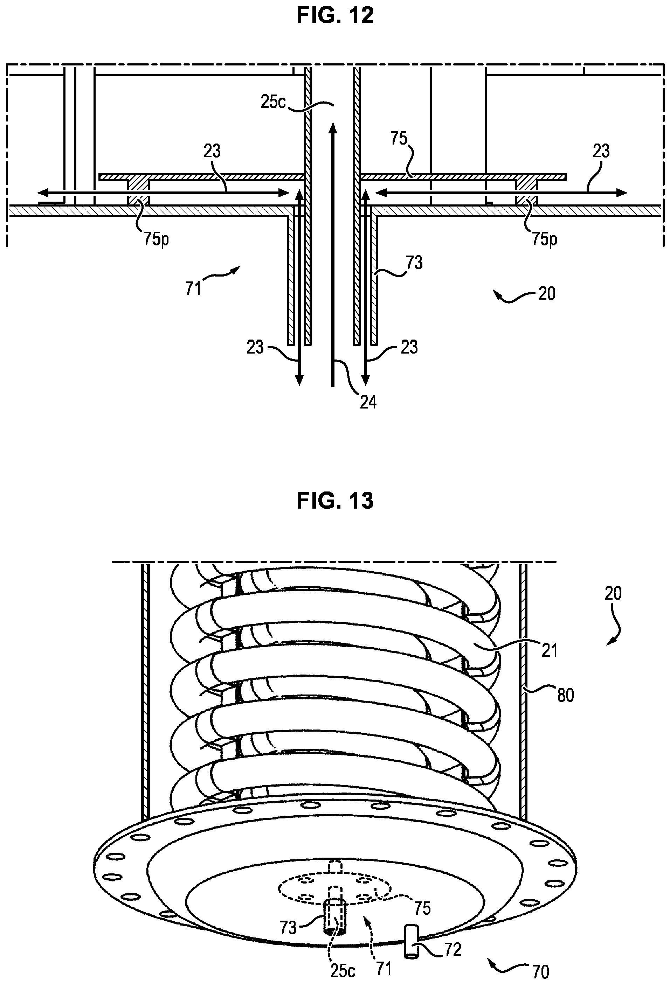

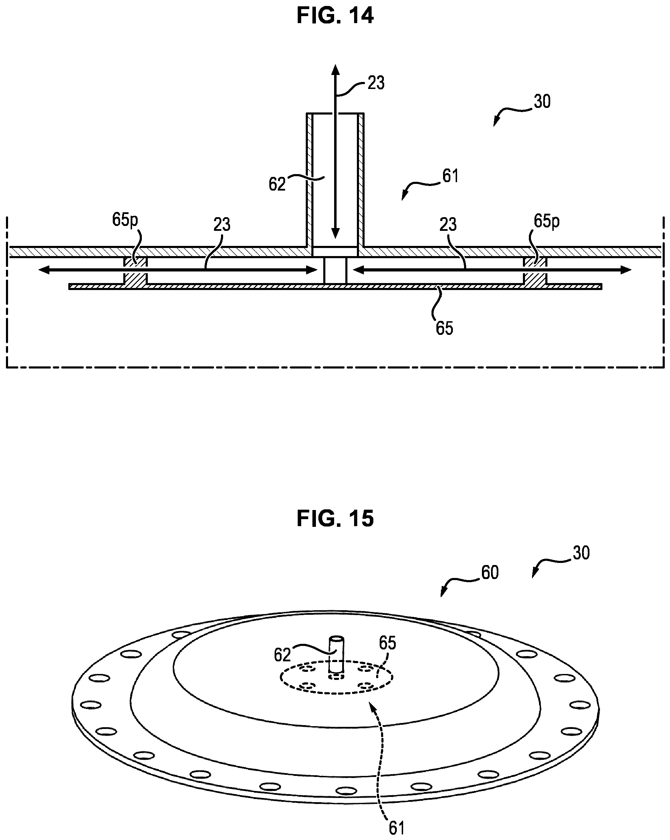

En outre, la première partie 20 comporte des premiers moyens d'entrée et/ou de sortie 71, mieux visibles sur les figures 12 et 13, d'un deuxième fluide caloporteur 23 apte à circuler dans le premier volume V1 autour de l'échangeur thermique de type serpentin 21, et dans le deuxième volume V2 autour des capsules 31. Avantageusement, l'élément de séparation 50 permet la communication fluidique du deuxième fluide caloporteur 23 entre la première partie 20 et la deuxième partie 30. De plus, la deuxième partie 30 comporte des deuxièmes moyens d'entrée et/ou de sortie 61, mieux visible sur les figures 14 et 15, du deuxième fluide caloporteur 23. Il faut noter que le deuxième fluide caloporteur 23 joue un rôle de fluide caloporteur dans le cadre du stockage de chaud mais il joue à la fois un rôle de fluide caloporteur et de fluide de stockage par matériau à changement de phase (MCP) dans le cadre du stockage de froid, comme décrit par la suite.

En conséquence, deux circuits fluidiques, représentés à l'aide de flèches sur la figure 4, sont présents dans l'enceinte de stockage thermique 100 conforme à l'invention.

Un premier circuit fluidique est situé à l'intérieur de la cuve 80 et à l'extérieur de l'échangeur thermique de type serpentin 21 et comporte le deuxième fluide caloporteur 23 qui peut changer de phases liquide/solide.

Avantageusement, le deuxième fluide caloporteur 23 est de l'eau. De la glace est alors générée autour de l'échangeur thermique de type serpentin 21. La température de fusion du deuxième fluide caloporteur 23 est alors égale à environ 0°C.

Un deuxième circuit fluidique est situé à l'intérieur des serpentins de l'échangeur thermique de type serpentin 21. Il comporte le premier fluide caloporteur 24 qui reste liquide. Le premier fluide caloporteur 24 est avantageusement une solution aqueuse de monoéthylène glycol (MEG), notamment une solution MEG à 30 %. En variante, il pourrait aussi s'agir d'un fluide frigorifique, par exemple de type R513A.

Avantageusement, l'échangeur thermique de type serpentin 21 comporte une pluralité de serpentins, par exemple 2 ou 3 serpentins, qui sont concentriques et reliés en série, et présentent des ailettes. Le montage en série des serpentins peut permettre d'obtenir une vitesse d'écoulement du premier fluide caloporteur 24 circulant dans les serpentins au début du régime turbulent de sorte à favoriser un échange thermique.

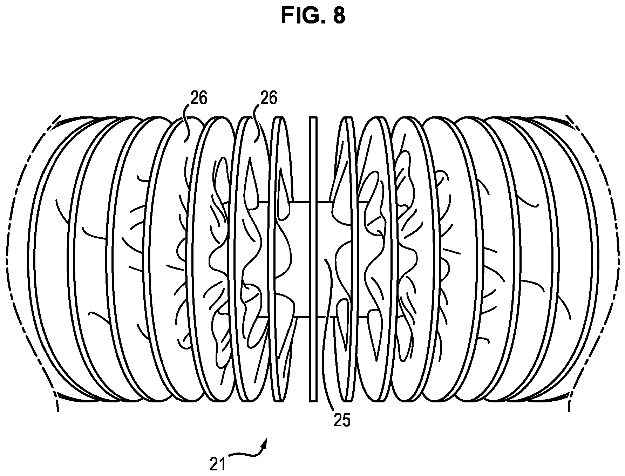

Ainsi, comme visible sur les figures 4 et 8, chaque serpentin peut comporter un tube 25 métallique, par exemple en acier inoxydable de type inox 316L ou 304L, entouré d'ailettes 26 spiralées métalliques, par exemple en cuivre.

Le tube métallique 25 peut par exemple présenter un diamètre extérieur compris entre 15 mm et 25 mm, par exemple entre 20 mm et 22 mm. Il peut également présenter une épaisseur comprise entre 2 mm et 3 mm, par exemple de l'ordre de 2,5 mm.

Les ailettes 26 peuvent présenter une hauteur, mesurée selon l'axe central longitudinal X, comprise entre 10 mm et 20 mm, par exemple de l'ordre de 15 mm. Leur épaisseur peut être comprise entre 0,3 mm et 1,5 mm, par exemple de l'ordre de 1 mm. Le pas entre les ailettes peut être compris entre 3,5 mm et 6,5 mm, par exemple de l'ordre de 5 mm.

Comme visible sur la figure 4, l'espacement Eₛ entre deux spires adjacentes d'un serpentin, mesuré selon l'axe central longitudinal X, peut être compris entre 85 mm et 95 mm, par exemple entre 90 mm et 92 mm. De plus, le diamètre Dₛ d'un serpentin, mesuré perpendiculairement à l'axe central longitudinal X, peut par exemple être compris entre 250 mm et 500 mm.

Par ailleurs, comme visible sur la figure 4, l'échangeur thermique de type serpentin 21 comporte un serpentin comprenant un tube central 25c s'étendant selon l'axe central longitudinal X de l'enceinte de stockage thermique 100 pour l'entrée et/ou la sortie du premier fluide caloporteur 24. La réalisation des serpentins permet de mécaniser un nombre conséquent d'étapes de fabrication, notamment l'assemblage des tubes 25 par soudage, l'ajout des ailettes 26 autour des tubes 25 et la mise en forme du serpentin avec un pas prédéfini.

Par ailleurs, l'échangeur thermique de type serpentin 21 comporte un serpentin comprenant un tube latéral 72 s'étendant selon l'axe central longitudinal X de l'enceinte de stockage thermique 100 pour la sortie et/ou l'entrée du premier fluide caloporteur 24. Le tube latéral 72 est décalé axialement par rapport au tube central 25c.

En outre, comme visible notamment sur la figure 5, la première partie 20 comporte un premier dispositif de supportage 22 de l'échangeur thermique de type serpentin 21. Celui-ci permet de garantir un espacement entre chaque spire des serpentins et de supporter de grandes longueurs des tubes 25 des serpentins.

Ce premier dispositif de supportage 22 comporte une pluralité de premiers montants longitudinaux 27, de section sensiblement rectangulaire, s'étendant selon l'axe central longitudinal X de l'enceinte de stockage thermique 100, entre le premier élément de fermeture 70 et l'élément de séparation 50.

Ces premiers montants longitudinaux 27 sont pourvus de pattes de maintien 29 des spires des serpentins, qui sont disposées régulièrement le long de chaque premier montant longitudinal 27. Ces pattes de maintien 29 se présentent sous la forme de crochets entourant partiellement les spires.

Comme visible sur la figure 4, ces montants longitudinaux 27 peuvent par exemple présenter une épaisseur e₂₇ comprise entre 3,5 mm et 4,5 mm, notamment de l'ordre de 4 mm.

De plus, les premiers montants longitudinaux 27 comportent chacun un orifice de fixation 28 sous la forme d'un perçage situé à l'extrémité haute ou supérieure du premier montant longitudinal 27 de sorte à maintenir en position l'échangeur thermique de type serpentin 21 par rapport à l'élément de séparation 50 en permettant la fixation des premiers montants longitudinaux 27 à l'élément de séparation 50.

Comme visible sur les figures 9 à 11, les capsules 31 se présentent sous la forme de tubes cylindriques, bien que cette forme ne soit pas limitative, répartis sur plusieurs étages E1, E2 superposés les uns aux autres selon l'axe central longitudinal X de l'enceinte de stockage thermique 100.

Les capsules 31 sont par exemple remplies à 95 % de leur volume. Le matériau à changement de phase 33, situé dans les capsules 31, peut par exemple être de l'acétate de sodium trihydraté (ou encore « Sodium Acetate Trihydrate » (SAT) en anglais).

Les capsules 31 peuvent présenter des longueurs différentes afin d'occuper l'espace du deuxième volume V2, par exemple des longueurs comprises entre 220 mm et 550 mm. Leur diamètre interne peut être compris entre 35 mm et 40 mm. Leur diamètre externe peut être compris entre 40 mm et 45 mm.

Avantageusement, les capsules 31 s'étendent horizontalement par rapport à l'axe central longitudinal vertical X de l'enceinte de stockage thermique 100 de sorte à permettre d'éviter la ségrégation du matériau à changement de phase 33 situé à l'intérieur des capsules 31. L'utilisation privilégiée de tubes pour les capsules 31 facilite leur réalisation et permet une résistance à la dilatation du matériau à changement de phase 33.

Chaque étage E1, E2 de capsules 31 comporte une pluralité de capsules s'étendant sensiblement parallèlement les unes aux autres selon une direction sensiblement perpendiculaire à l'axe central longitudinal X de l'enceinte de stockage thermique 100. De plus, comme visible sur la figure 9, deux étages adjacents E1, E2 comportent des capsules 31 qui s'étendent de façon croisée les unes par rapport aux autres. En particulier, les capsules d'un premier étage E1 s'étendent sensiblement perpendiculairement par rapport aux capsules d'un deuxième étage E2 adjacent au premier étage E1.

L'horizontalité des capsules 31 permet également la circulation du deuxième fluide caloporteur 23 provenant du premier volume V1, autour des capsules 31 tout en générant des turbulences du fait des croisements entre capsules 31 pour favoriser les échanges thermiques.

Par ailleurs, la deuxième partie 30 comporte un deuxième dispositif de supportage 32 des capsules 31 configuré pour garantir un espacement entre les capsules 31 et permettre la circulation du deuxième fluide caloporteur 23 et le positionnement et le maintien en position des capsules 31.

Le deuxième dispositif de supportage 32 comporte une pluralité de deuxièmes montants longitudinaux 36, de section de forme circulaire, qui s'étendent majoritairement sur le pourtour du deuxième volume V2, selon l'axe central longitudinal X de l'enceinte de stockage thermique 100, entre le deuxième élément de fermeture 60 et l'élément de séparation 50.

Le deuxième dispositif de supportage 22 permet donc le positionnement de chaque capsule 31 en parallèle par étage tout en laissant un espacement entre chacune d'elles et permettant le croisement des capsules 31 d'un étage à l'autre.

Les deuxièmes montants longitudinaux 36 peuvent se présenter sous la forme de tiges verticales avec un diamètre compris entre 8 mm et 12 mm, par exemple de l'ordre de 10 mm.

Par ailleurs, comme visible sur les figures 12 et 13, le premier élément de fermeture 70 comporte les premiers moyens d'entrée et/ou de sortie 71 sous la forme d'un premier distributeur du deuxième fluide caloporteur 23.

Spécifiquement, ces premiers moyens d'entrée et/ou de sortie 71 comportent une première ouverture tubulaire 73 dans laquelle débouche le tube central 25c, de section transversale inférieure à la section transversale de la première ouverture tubulaire 73. Le deuxième fluide caloporteur 23 est alors apte à circuler entre la paroi interne de l'ouverture tubulaire 73 et la paroi externe du tube central 25c, comme schématisé à l'aide des flèches représentant le deuxième fluide caloporteur 23. Ainsi, un double tube concentrique est formé pour le passage du deuxième fluide caloporteur 23 et le passage du premier fluide caloporteur 24.

Avantageusement, une première plaque déflectrice 75 est située à l'intérieur du premier volume V1 au droit des premiers moyens d'entrée et/ou de sortie 71, et fixée au premier élément de fermeture 70 à l'aide de plots 75p, ici quatre plots 75p, permettant un espacement pour la circulation du deuxième fluide caloporteur 23. La présence de la première plaque déflectrice 75 peut permettre de limiter l'effet de jet et d'assurer une homogénéisation de la circulation du deuxième fluide caloporteur 23 dans le premier volume V1.

En outre, comme visible sur les figures 14 et 15, le deuxième élément de fermeture 60 comporte les deuxièmes moyens d'entrée et/ou de sortie 61 sous la forme d'un deuxième distributeur du deuxième fluide caloporteur 23. Ces deuxièmes moyens d'entrée et/ou de sortie 61 comportent une deuxième ouverture tubulaire 62 pour la circulation du deuxième fluide caloporteur 23.

Une deuxième plaque déflectrice 65 est située à l'intérieur du deuxième volume V2 au droit des deuxièmes moyens d'entrée et/ou de sortie 61, et fixée au deuxième élément de fermeture 60 à l'aide de plots 65p, ici quatre plots 65p, permettant un espacement pour la circulation du deuxième fluide caloporteur 23. La présence de la deuxième plaque déflectrice 65 peut également permettre ici de limiter l'effet de jet et d'assurer une homogénéisation de la circulation du deuxième fluide caloporteur 23 dans le deuxième volume V2.

La première plaque déflectrice 75 et la deuxième plaque déflectrice 65 permettent avantageusement de participer à la génération de la thermocline lors du stockage de chaud, en mode hiver.

Il est à noter que la cuve 80, les capsules 31, le premier dispositif de supportage 22, le deuxième dispositif de supportage 32, le premier élément de fermeture 70, le deuxième élément de fermeture 60, la première plaque déflectrice 75 et/ou la deuxième plaque déflectrice 65 peuvent être métalliques, étant notamment en acier inoxydable, par exemple de type inox 316L ou 204L.

L'enceinte de stockage thermique 100 conforme à l'invention peut permettre de tirer parti du changement de phase de deux matériaux de type MCP, à savoir le deuxième fluide caloporteur 23, préférentiellement de l'eau, et le matériau à changement de phase 33, préférentiellement du SAT, qui présente une température de fusion autour de 58°C. Elle permet également de coupler ce stockage de type MCP à un couplage de type thermocline.

Lors de la mise en œuvre d'un procédé de stockage thermique à l'aide de l'enceinte de stockage thermique 100 conforme à l'invention, il est possible d'avoir tout d'abord une étape de stockage de froid, en particulier en mode été, sous forme d'énergie latente par le gel du deuxième fluide caloporteur 23 et sous forme d'énergie sensible de type thermocline par la diminution de la température du volume total du deuxième fluide caloporteur 23.

En particulier, lors de la charge thermique du stockage, une circulation du premier fluide caloporteur 24 est réalisée dans l'échangeur thermique de type serpentin 21, depuis le tube central 25c vers le tube latéral 72, avec une température du premier fluide caloporteur 24 par exemple comprise entre -10°C et 0°C, voire entre -10°C et -5°C. Un échange de chaleur se produit alors entre le premier fluide caloporteur 24 et le deuxième fluide caloporteur 23 contenu dans le premier volume V1 qui entraîne le gel de celui-ci autour des tubes de l'échangeur thermique de type serpentin 21 ainsi qu'une diminution de la température du deuxième fluide caloporteur 23. Le gel obtenu est partiel, c'est-à-dire que la glace est générée jusqu'à une certaine distance par rapport aux ailettes 26, par exemple jusqu'à 2 cm, pour des raisons mécaniques et afin de faciliter la décharge thermique.

Lors de la décharge thermique du stockage, une circulation directe du deuxième fluide caloporteur 23, ici de l'eau, est forcée entre le deuxième élément de fermeture 60 (injection d'eau, par exemple à une température de l'ordre de 15°C) et le premier élément de fermeture 70 (soutirage d'eau, par exemple à une température de l'ordre de 0°C à 5°C), la fonte de la glace libérant alors la chaleur latente.

Il est en outre possible d'avoir une étape de stockage de chaud, en particulier en mode été, sous forme d'énergie latente par la fonte du MCP 33 encapsulé et majoritairement sous forme d'énergie sensible de type thermocline par l'augmentation de la température du MCP 33 et du volume total du deuxième fluide caloporteur 23.

En particulier, lors de la charge thermique du stockage, une circulation directe du deuxième fluide caloporteur 23 est forcée entre le deuxième élément de fermeture 60 (injection d'eau chaude, par exemple à une température comprise entre 70°C et 90°C) et le premier élément de fermeture 70 (soutirage d'eau).

Lors de la décharge thermique du stockage, une circulation directe du deuxième fluide caloporteur 23 est forcée entre le premier élément de fermeture 70 (injection d'eau, par exemple à une température de l'ordre de 35°C) et le deuxième élément de fermeture 60 (soutirage d'eau, par exemple à une température comprise entre 55°C et 60°C).

Ainsi, l'enceinte de stockage thermique 100 selon l'invention peut répondre facilement aux besoins saisonniers liés au stockage de chaud et de froid. En hiver, on peut par exemple stocker de la chaleur la nuit et la déstocker en journée en fonction des besoins. En été, on peut par exemple stocker du froid la nuit et la déstocker en journée en fonction des besoins. L'enceinte de stockage thermique 100 permet donc d'assurer le stockage de chaud en hiver et le stockage de froid en été avec une seule cuve de stockage au lieu de deux, ce qui apporte un gain en termes d'encombrement et de coûts.

La température de changement de phase solide/liquide du deuxième fluide caloporteur 23 peut avantageusement être comprise entre -5° C et 15°C. Elle est notamment de l'ordre de 0°C lorsqu'il s'agit d'eau.

La température de changement de phase solide/liquide du matériau à changement de phase 33 peut avantageusement être comprise entre 25°C et 70°C.

Avantageusement, la température de changement de phase solide/liquide du matériau à changement de phase 33 est supérieure d'au moins 10°C, voire d'au moins 20°C, à la température de changement de phase solide/liquide du deuxième fluide caloporteur 23.

Grâce à l'invention, l'utilisation d'une même cuve 80 pour le stockage de chaud et le stockage de froid peut permettre d'obtenir une enceinte de stockage thermique de forte compacité à faible coût permettant de multiples applications. Il est ainsi possible de coupler un stockage de froid, notamment par génération de glace autour de l'échangeur thermique de type serpentin 21 avec une thermocline autour des tubes pour le stockage de chaud qui est rééquilibré avec les capsules 31 contenant le MCP 33.

La décharge thermique pour le refroidissement peut se faire directement par circulation d'eau pour faire fondre la glace sans besoin d'échangeur thermique intermédiaire, ce qui permet d'augmenter la compacité. L'eau circule entre les serpentins pris en glace.

L'enceinte de stockage thermique 100 peut permettre l'obtention d'une capacité énergétique thermique d'au moins 9 kWh, notamment en mode été ou en mode hiver.

Le Tableau 1 ci-dessous donne des exemples de plages de fonctionnement des modes de fonctionnement, été et hiver, envisagés pour l'enceinte de stockage thermique 100 :

**Tableau 1**

| Mode | Nature du fluide | [Température entrée min ; Température entrée max] circuit | Température nominale stockage | [Température min ; Température max] stockage | Pression max circuit | [Débit nominal/Débit max] |
|---|---|---|---|---|---|---|
| Mode été | Fluide 24 : MEG 30% | [-10°C ; -5°C] | 0°C | [-10°C ; 15°C] | < 10 bars | [0,1 kg/s ; 0,4 kg/s] |
| | Fluide 23 : eau | [0°C ; 15°C] | | | | [0,1 kg/s ; 0,5 kg/s] |
| Mode hiver | Fluide 24 : MEG 30% | / | 55°C - 60°C | [35°C ; 90°C] | < 10 bars | / |
| | Fluide 23 : eau | [35°C ; 90°C] | | | | [0,1 kg/s ; 0,5 kg/s] |

Bien entendu, l'invention n'est pas limitée aux exemples de réalisation qui viennent d'être décrits. Diverses modifications peuvent y être apportées par l'homme du métier.

En particulier, la première partie 20 pourrait comporter des moyens de chauffage du deuxième fluide caloporteur 23, par exemple une résistance électrique, par exemple de puissance de l'ordre de 3 kW.

## Revendications

1. Enceinte de stockage thermique (100), pour (le stockage de chaud et le stockage de froid, par couplage entre stockage de type thermocline et stockage de type matériau à changement de phase, **caractérisée en ce qu'**elle comporte :
- une cuve (80), définissant un volume interne (V), comportant une première extrémité (80i) et une deuxième extrémité (80s), opposée à la première extrémité (80i),
- un premier élément de fermeture (70), situé au niveau de la première extrémité (80i) de la cuve (80),
- un deuxième élément de fermeture (60), situé au niveau de la deuxième extrémité (80s) de la cuve (80), le volume interne (V) étant délimité par la cuve (80) et les premier (70) et deuxième (60) éléments de fermeture,
- un élément de séparation (50), situé à l'intérieur de la cuve (80), divisant le volume interne (V) en un premier volume (V1) et un deuxième volume (V2), et délimitant l'enceinte de stockage thermique (100) en une première partie (20) contenant le premier volume (V1) et une deuxième partie (30) contenant le deuxième volume (V2),
la deuxième partie (30) comportant une pluralité de capsules (31) contenant un matériau à changement de phase (33), l'enceinte de stockage thermique étant **caractérisée en ce que** la première partie (20) comporte un échangeur thermique de type serpentin (21) dans lequel un premier fluide caloporteur (24) est apte à circuler pour le stockage de froid, et **en ce que** la première partie (20) comporte des premiers moyens d'entrée et/ou de sortie (71) d'un deuxième fluide caloporteur (23) apte à circuler dans le premier volume (V1) autour de l'échangeur thermique de type serpentin (21), et dans le deuxième volume (V2) autour des capsules (31) pour le stockage de froid et pour le stockage de chaud, l'élément de séparation (50) étant configuré pour permettre la communication fluidique du deuxième fluide caloporteur (23) entre la première partie (20) et la deuxième partie (30), le deuxième fluide caloporteur (23) agissant en tant que fluide à changement de phase pour le stockage de froid et tant que fluide caloporteur pour le stockage de chaud, et
la deuxième partie (30) comportant des deuxièmes moyens d'entrée et/ou de sortie (61) du deuxième fluide caloporteur (23).

2. Enceinte de stockage thermique selon la revendication 1, dans laquelle l'échangeur thermique de type serpentin (21) comporte une pluralité de serpentins concentriques et/ou reliés en série.

3. Enceinte de stockage thermique selon la revendication 1 ou 2, dans laquelle l'échangeur thermique de type serpentin (21) comporte un serpentin comprenant un tube central (25c) s'étendant selon l'axe central longitudinal (X) de l'enceinte de stockage thermique (100) pour l'entrée et/ou la sortie du premier fluide caloporteur (24).

4. Enceinte de stockage thermique selon l'une des revendications précédentes, dans laquelle l'échangeur thermique de type serpentin (21) comporte un serpentin comprenant un tube latéral (72) s'étendant selon l'axe central longitudinal (X) de l'enceinte de stockage thermique (100) pour la sortie et/ou l'entrée du premier fluide caloporteur (24), le tube latéral (72) étant notamment décalé axialement par rapport au tube central (25c).

5. Enceinte de stockage thermique selon l'une quelconque des revendications précédentes, dans laquelle la première partie (20) comporte un premier dispositif de supportage (22) de l'échangeur thermique de type serpentin (21) configuré pour garantir un espacement entre chaque spire du ou des serpentin(s).

6. Enceinte de stockage thermique selon la revendication 5, dans laquelle le premier dispositif de supportage (21) comporte au moins un premier montant longitudinal (27) pourvu d'une ou plusieurs pattes de maintien (29) des spires du ou des serpentin(s).

7. Enceinte de stockage thermique selon la revendication 6, dans laquelle au moins un premier montant longitudinal (27) comporte un orifice de fixation (28) pour le maintien en position de l'échangeur thermique de type serpentin (21) par rapport à l'élément de séparation (50).

8. Enceinte de stockage thermique selon l'une quelconque des revendications précédentes, dans laquelle les capsules (31) se présentent sous la forme de tubes, répartis sur plusieurs étages (E1, E2) superposés les uns aux autres selon l'axe central longitudinal (X) de l'enceinte de stockage thermique (100), chaque étage (E1, E2) comportant une pluralité de capsules (31) s'étendant sensiblement parallèlement les unes aux autres selon une direction sensiblement perpendiculaire à l'axe central longitudinal (X) de l'enceinte de stockage thermique (100).

9. Enceinte de stockage thermique selon la revendication 8, dans laquelle deux étages adjacents (E1, E2) comportent des capsules (31) qui s'étendent de façon croisée les unes par rapport aux autres, les capsules d'un premier étage (E1) s'étendant notamment sensiblement perpendiculairement par rapport aux capsules d'un deuxième étage (E2) adjacent au premier étage (E1).

10. Enceinte de stockage thermique selon l'une quelconque des revendications précédentes, dans laquelle la deuxième partie (30) comporte un deuxième dispositif de supportage (32) des capsules (31) configuré pour garantir un espacement entre les capsules (31) et permettre la circulation du deuxième fluide caloporteur (23), comportant notamment au moins un deuxième montant longitudinal (36).

11. Enceinte de stockage thermique selon l'une quelconque des revendications précédentes, dans laquelle le premier élément de fermeture (70) comporte les premiers moyens d'entrée et/ou de sortie (71) du deuxième fluide caloporteur (23), l'échangeur thermique de type serpentin (21) comportant un serpentin comprenant un tube central (25c) s'étendant selon l'axe central longitudinal (X) de l'enceinte de stockage thermique (100) pour l'entrée et/ou la sortie du premier fluide caloporteur (24), les premiers moyens d'entrée et/ou de sortie (71) comportant une première ouverture tubulaire (73) dans laquelle débouche le tube central (25c), de section transversale inférieure à la section transversale de la première ouverture tubulaire (73), le deuxième fluide caloporteur (23) étant apte à circuler entre la paroi interne de l'ouverture tubulaire (73) et la paroi externe du tube central (25c).

12. Enceinte de stockage thermique selon la revendication 11, dans laquelle le premier élément de fermeture (70) comporte une première plaque déflectrice (75) à l'intérieur du premier volume (V1) au droit des premiers moyens d'entrée et/ou de sortie (71).

13. Enceinte de stockage thermique selon l'une quelconque des revendications précédentes, dans laquelle le deuxième élément de fermeture (60) comporte les deuxièmes moyens d'entrée et/ou de sortie (61) du deuxième fluide caloporteur (23), les deuxièmes moyens d'entrée et/ou de sortie (61) comportant une deuxième ouverture tubulaire (62) pour la circulation du deuxième fluide caloporteur (23).

14. Enceinte de stockage thermique selon la revendication 13, dans laquelle le deuxième élément de fermeture (60) comporte une deuxième plaque déflectrice (65) à l'intérieur du deuxième volume (V2) au droit des deuxièmes moyens d'entrée et/ou de sortie (61).

15. Procédé de stockage thermique mis en œuvre au moyen d'une enceinte de stockage thermique (100) selon l'une quelconque des revendications précédentes, **caractérisé en ce qu'**il comporte :
- l'étape de stockage de froid par circulation du premier fluide caloporteur (24) dans l'échangeur thermique de type serpentin (21) entraînant un stockage d'énergie latente par changement de phase liquide/solide, au moins partiel, du deuxième fluide caloporteur (23) contenu dans le premier volume (V1) et un stockage d'énergie sensible de type thermocline par une diminution de température du deuxième fluide caloporteur (23) contenu dans le volume interne (V),
et/ou,
- l'étape de stockage de chaud par circulation du deuxième fluide caloporteur (23), notamment entre le deuxième élément de fermeture (60) et le premier élément de fermeture (70), entraînant un stockage d'énergie latente par changement de phase solide/liquide du matériau à changement de phase (33) contenu dans les capsules (31) et un stockage d'énergie sensible de type thermocline par une augmentation de température du matériau à changement de phase (33) et du deuxième fluide caloporteur (23) contenu dans le volume interne (V).

## Patentansprüche

1. Thermischer Speicherbehälter (100) zur Wärmespeicherung und Kältespeicherung durch Kopplung zwischen Speicherung vom Thermoklinentyp und Speicherung vom Phasenwechselmaterial-Typ, **dadurch gekennzeichnet, dass** er umfasst:
- einen Tank (80), der ein Innenvolumen (V) definiert, umfassend ein erstes Ende (80i) und ein zweites Ende (80s), entgegengesetzt zu dem ersten Ende (80i),
- ein erstes Verschlusselement (70), das sich auf Höhe des ersten Endes (80i) des Tanks (80) befindet,
- ein zweites Verschlusselement (60), das sich auf Höhe des zweiten Endes (80s) des Tanks (80) befindet, wobei das Innenvolumen (V) durch den Tank (80) und das erste (70) und das zweite (60) Verschlusselement abgegrenzt ist,
- ein Trennelement (50), das sich im Inneren des Tanks (80) befindet, das Innenvolumen (V) in ein erstes Volumen (V1) und ein zweites Volumen (V2) unterteilend und den thermischen Speicherbehälter (100) in einen ersten Teil (20), der das erste Volumen (V1) enthält, und einen zweiten Teil (30), der das zweite Volumen (V2) enthält, abgrenzend,
wobei der zweite Teil (30) eine Vielzahl von Kapseln (31) umfasst, die ein Phasenwechselmaterial (33) enthalten, wobei der thermische Speicherbehälter **dadurch gekennzeichnet, dass** der erste Teil (20) einen Wärmetauscher vom Rohrschlangentyp (21) umfasst, in dem ein erstes Wärmeträgerfluid (24) zur Kältespeicherung zirkulieren kann, und dass
der erste Teil (20) erste Eintritts- und/oder Austrittsmittel (71) für ein zweites Wärmeträgerfluid (23), das in dem ersten Volumen (V1) um den Wärmetauscher vom Rohrschlangentyp (21) und in dem zweiten Volumen (V2) um Kapseln (31) zur Kältespeicherung und zur Wärmespeicherung zirkulieren kann, umfasst, wobei das Trennelement (50) dazu konfiguriert ist, die Fluidkommunikation des zweiten Wärmeträgerfluids (23) zwischen dem ersten Teil (20) und dem zweiten Teil (30) zuzulassen, wobei das zweite Wärmeträgerfluid (23) als Phasenwechselfluid zur Kältespeicherung und als Wärmeträgerfluid zur Wärmespeicherung fungiert, und
der zweite Teil (30) zweite Eintritts- und/oder Austrittsmittel (61) für das zweite Wärmeträgerfluid (23) umfasst.

2. Thermischer Speicherbehälter nach Anspruch 1, wobei der Wärmetauscher vom Rohrschlangentyp (21) eine Vielzahl von konzentrischen und/oder in Reihe verbundenen Rohrschlangen umfasst.

3. Thermischer Speicherbehälter nach Anspruch 1 oder 2, wobei der Wärmetauscher vom Rohrschlangentyp (21) eine Rohrschlange umfasst, die eine zentrale Röhre (25c) umfasst, die sich entlang der Längsmittelachse (X) des thermischen Speicherbehälters (100) zum Eintritt und/oder Austritt des ersten Wärmeträgerfluids (24) erstreckt.

4. Thermischer Speicherbehälter nach einem der vorhergehenden Ansprüche, wobei der Wärmetauscher vom Rohrschlangentyp (21) eine Rohrschlange umfasst, die eine seitliche Röhre (72) umfasst, die sich entlang der Längsmittelachse (X) des thermischen Speicherbehälters (100) zum Austritt und/oder Eintritt des ersten Wärmeträgerfluids (24) erstreckt, wobei die seitliche Röhre (72) insbesondere in Bezug auf die zentrale Röhre (25c) axial verschoben ist.

5. Thermischer Speicherbehälter nach einem der vorhergehenden Ansprüche, wobei der erste Teil (20) eine erste Halterungsvorrichtung (22) für den Wärmetauscher vom Rohrschlangentyp (21) umfasst, die dazu konfiguriert ist, einen Abstand zwischen jeder Windung der Rohrschlange oder Rohrschlangen sicherzustellen.

6. Thermischer Speicherbehälter nach Anspruch 5, wobei die erste Halterungsvorrichtung (21) mindestens einen ersten Längsholm (27) umfasst, der mit einer oder mehreren Haltelaschen (29) von Windungen der Rohrschlange oder Rohrschlangen versehen ist.

7. Thermischer Speicherbehälter nach Anspruch 6, wobei mindestens ein erster Längsholm (27) eine Befestigungsöffnung (28) umfasst, um den Wärmetauscher vom Rohrschlangentyp (21) in Bezug auf das Trennelement (50) in Position zu halten.

8. Thermischer Speicherbehälter nach einem der vorhergehenden Ansprüche, wobei die Kapseln (31) die Form von Röhren aufweisen, die in mehrere Stufen (E1, E2) aufgeteilt sind, die entlang der Längsmittelachse (X) des thermischen Speicherbehälters (100) übereinander liegen, wobei jedes Stufe (E1, E2) eine Vielzahl von Kapseln (31) umfasst, die sich im Wesentlichen parallel zueinander entlang einer Richtung erstrecken, die im Wesentlichen senkrecht zu der Längsmittelachse (X) des thermischen Speicherbehälters (100) ist.

9. Thermischer Speicherbehälter nach Anspruch 8, wobei zwei benachbarte Stufen (E1, E2) Kapseln (31) umfassen, die sich zueinander überkreuzt erstrecken, wobei sich die Kapseln einer ersten Stufe (E1) insbesondere im Wesentlichen senkrecht in Bezug auf die Kapseln einer zweiten Stufe (E2) erstrecken, die benachbart zu der ersten Stufe (E1) ist.

10. Thermischer Speicherbehälter nach einem der vorhergehenden Ansprüche, wobei der zweite Teil (30) eine zweite Halterungsvorrichtung (32) für die Kapseln (31) umfasst, die dazu konfiguriert ist, einen Abstand zwischen den Kapseln (31) sicherzustellen und die Zirkulation des zweiten Wärmeträgerfluids (23) zuzulassen, umfassend insbesondere mindestens einen zweiten Längsholm (36).

11. Thermischer Speicherbehälter nach einem der vorhergehenden Ansprüche, wobei das erste Verschlusselement (70) die ersten Eintritts- und/oder Austrittsmittel (71) für das zweite Wärmeträgerfluid (23) umfasst, wobei der Wärmetauscher vom Rohrschlangentyp (21) eine Rohrschlange umfasst, die eine zentrale Röhre (25c) umfasst, die sich entlang der Längsmittelachse (X) des thermischen Speicherbehälters (100) zum Eintritt und/oder Austritt des ersten Wärmeträgerfluids (24) erstreckt, wobei die ersten Eintritts- und/oder Austrittsmittel (71) einen ersten röhrenförmigen Durchbruch (73) umfassen, in dem die zentrale Röhre (25c) mündet, wobei die Querschnittsfläche kleiner als die Querschnittsfläche des ersten röhrenförmigen Durchbruchs (73) ist, wobei das zweite Wärmeträgerfluid (23) zwischen der Innenwand des röhrenförmigen Durchbruchs (73) und der Außenwand der zentralen Röhre (25c) zirkulieren kann.

12. Thermischer Speicherbehälter nach Anspruch 11, wobei das erste Verschlusselement (70) eine erste Prallplatte (75) im Inneren des ersten Volumens (V1) im Bereich der ersten Eintritts- und/oder Austrittsmittel (71) umfasst.

13. Thermischer Speicherbehälter nach einem der vorhergehenden Ansprüche, wobei das zweite Verschlusselement (60) die zweiten Eintritts- und Austrittsmittel (61) für das zweite Wärmeträgerfluid (23) umfasst, wobei die zweite Eintritts- und Austrittsmittel (61) einen zweiten röhrenförmigen Durchbruch (62) zur Zirkulation des zweiten Wärmeträgerfluids (23) umfassen.

14. Thermischer Speicherbehälter nach Anspruch 13, wobei das zweite Verschlusselement (60) eine zweite Prallplatte (65) im Inneren des zweiten Volumens (V2) im Bereich der zweiten Eintritts- und/oder Austrittsmittel (61) umfasst.

15. Thermisches Speicherungsverfahren mittels eines thermischen Speicherbehälters (100) nach einem der vorhergehenden Ansprüche, **dadurch gekennzeichnet, dass** es umfasst:
- den Kältespeicherungsschritt durch Zirkulation des ersten Wärmeträgerfluids (24) in dem Wärmetauscher vom Rohrschlangentyp (21), was eine Speicherung von latenter Energie durch einen zumindest partiellen Flüssig/Fest-Phasenwechsel des zweiten Wärmeträgerfluids (23), das in dem ersten Volumen (V1) enthalten ist, und eine Speicherung von sensibler Energie vom Thermoklinentyp durch eine Senkung der Temperatur des zweiten Wärmeträgerfluids (23), das in dem Innenvolumen (V) enthalten ist, bewirkt,
und/oder
- den Wärmespeicherungsschritt durch Zirkulation des zweiten Wärmeträgerfluids (23), insbesondere zwischen dem zweiten Verschlusselement (60) und dem ersten Verschlusselement (70), was eine Speicherung von latenter Energie durch einen Flüssig/Fest-Phasenwechsel des Phasenwechselmaterials (33), das in den Kapseln (31) enthalten ist, und eine Speicherung von sensibler Energie vom Thermoklinentyp durch eine Erhöhung der Temperatur des Phasenwechselmaterials (33) und des zweiten Wärmeträgerfluids (23), das in dem Innenvolumen (V) enthalten ist, bewirkt.

## Claims

1. Thermal storage enclosure (100) for storing heat and cold by coupling thermocline-type storage and phase change material-type storage, **characterised in that** it comprises:
- a tank (80), defining an internal volume (V), comprising a first end (80i) and a second end (80s), opposite the first end (80i),
- a first closure element (70), located at the first end (80i) of the tank (80),
- a second closure element (60), located at the second end (80s) of the tank (80), the internal volume (V) being delimited by the tank (80) and the first (70) and second (60) closure elements,
- a separating element (50), located inside the tank (80), dividing the internal volume (V) into a first volume (V1) and a second volume (V2), and delimiting the thermal storage enclosure (100) into a first part (20) containing the first volume (V1) and a second part (30) containing the second volume (V2),
the second part (30) comprising a plurality of capsules (31) containing a phase change material (33), the thermal storage enclosure being **characterised in that** the first part (20) comprises a coil-type heat exchanger (21) in which a first heat transfer fluid (24) is capable of circulating for cold storage, and **in that**
the first part (20) comprises first inlet and/or outlet means (71) for a second heat transfer fluid (23) capable of circulating in the first volume (V1) around the coil-type heat exchanger (21), and in the second volume (V2) around the capsules (31) for cold storage and for heat storage, the separating element (50) being configured to allow fluid communication of the second heat transfer fluid (23) between the first part (20) and the second part (30), the second heat transfer fluid (23) acting as a phase change fluid for cold storage and as a heat transfer fluid for heat storage, and
the second part (30) comprising second inlet and/or outlet means (61) for the second heat transfer fluid (23).

2. Thermal storage enclosure according to claim 1, wherein the coil-type heat exchanger (21) comprises a plurality of concentric and/or series-connected coils.

3. Thermal storage enclosure according to claim 1 or 2, wherein the coil-type heat exchanger (21) comprises a coil including a central tube (25c) extending along the central longitudinal axis (X) of the thermal storage enclosure (100) for the inlet and/or outlet of the first heat transfer fluid (24).

4. Thermal storage enclosure according to one of the preceding claims, wherein the coil-type heat exchanger (21) comprises a coil including a side tube (72) extending along the longitudinal central axis (X) of the thermal storage enclosure (100) for the outlet and/or inlet of the first heat transfer fluid (24), the side tube (72) being offset axially relative to the central tube (25c).

5. Thermal storage enclosure according to any of the preceding claims, wherein the first part (20) comprises a first support device (22) for the coil-type heat exchanger (21) configured to ensure spacing between each coil of the coil(s).

6. Thermal storage enclosure according to claim 5, wherein the first support device (21) comprises at least one first longitudinal upright (27) provided with one or more retaining tabs (29) for the coils of the coil(s).

7. Thermal storage enclosure according to claim 6, wherein at least one first longitudinal upright (27) comprises a fixing hole (28) for holding the coil-type heat exchanger (21) in position relative to the separating element (50).

8. Thermal storage enclosure according to any of the preceding claims, wherein the capsules (31) are in the form of tubes, distributed over several tiers (E1, E2) superimposed on one another along the central longitudinal axis (X) of the thermal storage enclosure (100), each tier (E1, E2) comprising a plurality of capsules (31) extending substantially parallel to each other in a direction substantially perpendicular to the central longitudinal axis (X) of the thermal storage enclosure (100).

9. Thermal storage enclosure according to claim 8, wherein two adjacent tiers (E1, E2) comprise capsules (31) that extend in a criss-cross pattern relative to each other, the capsules of a first tier (E1) extending in particular substantially perpendicular to the capsules of a second tier (E2) adjacent to the first tier (E1).

10. Thermal storage enclosure according to any of the preceding claims, wherein the second part (30) comprises a second device (32) for supporting the capsules (31), configured to ensure spacing between the capsules (31) and to allow circulation of the second heat transfer fluid (23), comprising in particular at least one second longitudinal upright (36).

11. Thermal storage enclosure according to any of the preceding claims, wherein the first closure element (70) comprises the first inlet and/or outlet means (71) for the second heat transfer fluid (23), the coil-type heat exchanger (21) comprising a coil including a central tube (25c) extending along the central longitudinal axis (X) of the thermal storage enclosure (100) for the inlet and/or outlet of the first heat transfer fluid (24), the first inlet and/or outlet means (71) comprising a first tubular opening (73) into which the central tube (25c) opens, with a cross-section smaller than the cross-section of the first tubular opening (73), the second heat transfer fluid (23) being able to circulate between the inner wall of the tubular opening (73) and the outer wall of the central tube (25c).

12. Thermal storage enclosure according to claim 11, wherein the first closure element (70) comprises a first deflector plate (75) inside the first volume (V1) opposite the first inlet and/or outlet means (71).

13. Thermal storage enclosure according to any of the preceding claims, wherein the second closure element (60) comprises second inlet and/or outlet means (61) for the second heat transfer fluid (23), the second inlet and/or outlet means (61) comprising a second tubular opening (62) for the circulation of the second heat transfer fluid (23).

14. Thermal storage enclosure according to claim 13, wherein the second closure element (60) comprises a second deflector plate (65) inside the second volume (V2) opposite the second inlet and/or outlet means (61).

15. Thermal storage method implemented by means of a thermal storage enclosure (100) according to any of the preceding claims, **characterised in that** it comprises:
- the step of storing cold by circulating the first heat transfer fluid (24) in the coil-type heat exchanger (21), resulting in the storage of latent energy by at least partial liquid/solid phase change of the second heat transfer fluid (23) contained in the first volume (V1) and the storage of sensible energy of the thermocline type by a decrease in the temperature of the second heat transfer fluid (23) contained in the internal volume (V),
and/or,
- the step of storing heat by circulating the second heat transfer fluid (23), in particular between the second closure element (60) and the first closure element (70), resulting in latent energy storage by solid/liquid phase change of the phase change material (33) contained in the capsules (31) and sensible energy storage of the thermocline type by an increase in temperature of the phase change material (33) and the second heat transfer fluid (23) contained in the internal volume (V).
